(19) Europäisches Patentamt
European Patent Office
Office européen des brevets

(11) **EP 4 664 243 A1**

(12) **EUROPEAN PATENT APPLICATION**
published in accordance with Art. 153(4) EPC

(43) Date of publication:
**17.12.2025   Bulletin 2025/51**

(21) Application number: **24759627.3**

(22) Date of filing: **19.02.2024**

(51) International Patent Classification (IPC):
**G06F 1/3203** (2019.01)

(52) Cooperative Patent Classification (CPC):
**G06F 1/3203; G06F 1/324; G06F 1/3296;**
**Y02D 10/00**

(86) International application number:
**PCT/CN2024/077495**

(87) International publication number:
**WO 2024/174950 (29.08.2024 Gazette 2024/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **22.02.2023  CN 202310187361**

(71) Applicant: **Huawei Technologies Co., Ltd.**
**Shenzhen, Guangdong 518129 (CN)**

(72) Inventors:
• **WANG, Ronghua**
  **Shenzhen, Guangdong 518129 (CN)**
• **ZHOU, Yongbin**
  **Shenzhen, Guangdong 518129 (CN)**
• **LIU, Zhen**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **DYNAMIC VOLTAGE AND FREQUENCY SCALING SYSTEM, RELATED METHOD AND STORAGE MEDIUM**

(57)    This application discloses a dynamic voltage and frequency scaling system, a related method, and a storage medium. The system may include: a first controller, configured to control a processing system to be at a target frequency, where the target frequency includes at least a first frequency and a second frequency; a sampler, configured to: sample performance of the processing system at the first frequency and performance of the processing system at the second frequency, to obtain a first performance parameter and a second performance parameter; and compare the first performance parameter with the second performance parameter to obtain a comparison result; and a second controller, configured to: determine a working frequency and a working voltage of the processing system based on the comparison result, and respectively adjust a current frequency and a current voltage of the processing system to the working frequency and the working voltage. According to this application, the processing system can be accurately stabilized at a balance point between performance and energy consumption in real time, to implement better energy efficiency control.

FIG. 2a

## Description

This application claims priority to Chinese Patent Application No. 202310187361.0, filed with the China National Intellectual Property Administration on February 22, 2023 and entitled "DYNAMIC VOLTAGE AND FREQUENCY SCALING SYSTEM, RELATED METHOD, AND STORAGE MEDIUM", which is incorporated herein by reference in its entirety.

## TECHNICAL FIELD

This application relates to the field of computer technologies, and in particular, to a dynamic voltage and frequency scaling system, a related method, and a storage medium.

## BACKGROUND

With continuous development of computer technologies, a working frequency and an integration level of an integrated circuit are continuously increased, and power consumption of the integrated circuit is also increased quickly. Consequently, it is difficult to improve performance and an integration level of various types of hardware (for example, a processor) in a computer, and heat dissipation costs are increased. To reduce power consumption and control heat generation, a dynamic voltage and frequency scaling (dynamic voltage frequency scaling, DVFS) technology is usually used to adjust voltages and frequencies of various types of hardware in the computer. In this case, the hardware does not always run at a highest frequency, but may be indicated based on a load and a configuration of the computer, to run at different frequencies and corresponding voltages. The computer adjusts the voltage and the frequency by using the DVFS technology, so that a good energy consumption ratio can be maintained when specific performance is maintained, or performance can be improved when a specific energy consumption constraint is met.

Currently, the DVFS technology is commonly implemented by collecting dynamic information of a processing system, and then analyzing the dynamic information by using a prediction model or a prediction algorithm, to complete performance prediction and provide a decision-making basis for voltage and frequency adjustment. However, in an actual running process of the computer, in a solution in which DVFS is implemented by using a prediction model or a prediction algorithm, if accuracy of the DVFS needs to be ensured, a large amount of dynamic information of the processing system usually needs to be collected for analysis. In this case, analysis time of the prediction model or the prediction algorithm is prolonged, and real-time performance cannot be ensured. On the contrary, if the real-time performance needs to be ensured, accuracy is reduced. It can be learned that, it is difficult to achieve high accuracy and real-time performance when the voltage and the frequency are adjusted by using the DVFS technology that depends on the prediction model or the prediction algorithm.

Therefore, how to provide a DVFS system and method with high accuracy and real-time performance is an urgent problem to be resolved.

## SUMMARY

Embodiments of this application provide a dynamic voltage and frequency scaling system, a related method, and a storage medium, to accurately stabilize a processing system at a balance point between performance and energy consumption in real time, so as to implement better energy efficiency control.

According to a first aspect, an embodiment of this application provides a dynamic voltage and frequency scaling system. The system may include:

> a first controller, configured to control a processing system to be at a target frequency, where the target frequency includes at least a first frequency and a second frequency;
> a sampler, configured to: sample performance of the processing system at the first frequency and performance of the processing system at the second frequency, to obtain a first performance parameter and a second performance parameter; and compare the first performance parameter with the second performance parameter to obtain a comparison result; and
> a second controller, configured to: determine a working frequency and a working voltage of the processing system based on the comparison result, and respectively adjust a current frequency and a current voltage of the processing system to the working frequency and the working voltage.

In the conventional technology, a DVFS technology is usually implemented by analyzing dynamic information of the processing system by using a prediction model or a prediction algorithm, to obtain a performance prediction result (for example, a frequency scaling factor), so as to perform voltage and frequency adjustment based on the performance prediction result. However, it is difficult to balance accuracy and real-time performance of a solution in which DVFS is implemented by using the prediction model or the prediction algorithm. In this embodiment of this application, in a running process of a computer, the first controller may adjust a frequency of the processing system, so that the processing system may be in different states. In addition, the sampler samples and compares performance of the processing system in different states, to determine the frequency scaling factor of the processing system. This avoids using a complex prediction model or prediction algorithm to predict the frequency scaling factor. Instead, a change relationship between the performance and the frequency of the processing system is determined based on an actual frequency change and an actual performance change. In this way, the second controller can accurately adjust the frequency and the voltage of the processing system to the working voltage and the working frequency in real time, and the processing system is stabilized at a balance point between performance and energy consumption in real time, so that an energy efficiency ratio is increased.

In a possible implementation, the second controller is specifically configured to:

obtain constraint information, where the constraint information includes one or more of the following: frequency information of a memory connected to the processing system, frequency information of a level 3 cache connected to the processing system, and a configuration policy of software running on the processing system; and

when the working frequency and the working voltage meet a requirement of the constraint information, respectively adjust the current frequency and the current voltage of the processing system to the working frequency and the working voltage.

In this embodiment of this application, after comparing performance parameters of the processing system at different frequencies to obtain a comparison result, the sampler may send the comparison result to the second controller. After determining a frequency and a voltage based on the comparison result, the second controller may further determine, with reference to the constraint information, whether the frequency and the voltage meet a requirement, and may respectively adjust the current frequency and the current voltage of the processing system to the determined frequency and the determined voltage when the frequency and the voltage that are determined by the second controller meet the requirement of the constraint information. In this embodiment of this application, the frequency and the voltage that are determined by the second controller are determined with reference to more information, so that accuracy of the DVFS can be further improved.

In a possible implementation, the second controller is further specifically configured to:
when the working frequency and the working voltage do not meet the requirement of the constraint information, update the working frequency and the working voltage based on the constraint information and the comparison result, and respectively adjust the current frequency and the current voltage of the processing system to an updated working frequency and an updated working voltage.

In this embodiment of this application, when the frequency and the voltage that are determined by the second controller do not meet the requirement of the constraint information, a frequency and a voltage may be re-determined based on the constraint information and the comparison result, and then the current frequency and the current voltage of the processing system are respectively adjusted to the re-determined frequency and the re-determined voltage. In this embodiment of this application, the frequency and the voltage that are determined by the second controller are determined with reference to more information, so that accuracy of the DVFS can be further improved.

In a possible implementation, the sampler is specifically configured to:

compare the first performance parameter with the second performance parameter to obtain a performance difference or a performance ratio; and determine a frequency scaling factor of the processing system based on a frequency difference or a frequency ratio and the performance difference or the performance ratio, where the frequency scaling factor represents a relationship between a performance change and a frequency change of the processing system; the comparison result includes the frequency scaling factor; and the frequency difference is a difference between the first frequency and the second frequency, and the frequency ratio is a ratio of the first frequency to the second frequency.

In this embodiment of this application, after obtaining the performance parameters of the processing system at different frequencies through sampling, the sampler may determine the frequency scaling factor of the processing system based on the frequency difference or the frequency ratio and the performance difference or the performance ratio. Different from a solution in which the frequency scaling factor needs to be determined by using the prediction model or the prediction algorithm in the conventional technology, in this embodiment of this application, a frequency of the processing system may be actually adjusted, performance of the processing system at different frequencies is sampled and compared, and then the frequency scaling factor of the processing system is quickly determined by using a simple policy, without depending on the prediction model or the prediction algorithm. In this way, accuracy and real-time performance of the DVFS are further guaranteed.

In a possible implementation, the first controller is specifically configured to:
control, based on pre-configuration information, the processing system to switch between the first frequency and the second frequency in a time-division manner, where the pre-configuration information includes duration of the first frequency and duration of the second frequency.

In this embodiment of this application, duration in which the processing system is at the first frequency and duration in which the processing system is at the second frequency may be configured (that is, corresponding to the duration of the first frequency and the duration of the second frequency). The duration of the first frequency and the duration of the second frequency may be configured based on requirements of different services, so that accuracy and real-time performance of the DVFS can be further ensured. In this way, the DVFS solution provided in this embodiment of this application can cover more application scenarios.

In a possible implementation, the processing system includes one or more of the following: a processor core, a level 1 cache, and a level 2 cache.

In this embodiment of this application, the processing system may include any combination of a processor core, the level 1 cache, and the level 2 cache, and the DVFS can flexibly and accurately adjust a frequency and a voltage of each piece of hardware.

In a possible implementation, the first performance parameter includes a first operation speed, and the second performance parameter includes a second operation speed.

In this embodiment of this application, the performance parameter of the processing system may be an operation speed, for example, MIPS. During sampling statistics collection, the sampler can quickly and accurately determine a quantity of instructions processed by the processing system, to further ensure accuracy and real-time performance of the DVFS.

According to a second aspect, an embodiment of this application provides a dynamic voltage and frequency scaling method. The method may include:

A first controller controls a processing system to be at a target frequency, where the target frequency includes at least a first frequency and a second frequency;

a sampler samples performance of the processing system at the first frequency and performance of the processing system at the second frequency, to obtain a first performance parameter and a second performance parameter, and compares the first performance parameter with the second performance parameter to obtain a comparison result; and a second controller determines a working frequency and a working voltage of the processing system based on the comparison result, and respectively adjusts a current frequency and a current voltage of the processing system to the working frequency and the working voltage.

In the conventional technology, a DVFS technology is usually implemented by analyzing dynamic information of the processing system by using a prediction model or a prediction algorithm, to obtain a performance prediction result (for example, a frequency scaling factor), so as to perform voltage and frequency adjustment based on the performance prediction result. However, it is difficult to balance accuracy and real-time performance of a solution in which DVFS is implemented by using the prediction model or the prediction algorithm. In this embodiment of this application, in a running process of a computer, the first controller may adjust a frequency of the processing system, so that the processing system may be in different states. In addition, the sampler samples and compares performance of the processing system in different states, to determine the frequency scaling factor of the processing system. This avoids using a complex prediction model or prediction algorithm to predict the frequency scaling factor. Instead, a change relationship between the performance and the frequency of the processing system is determined based on an actual frequency change and an actual performance change. In this way, the second controller can accurately adjust the frequency and the voltage of the processing system to the working voltage and the working frequency in real time, and the processing system is stabilized at a balance point between performance and energy consumption in real time, so that an energy efficiency ratio is increased.

In a possible implementation, determining the working frequency and the working voltage of the processing system based on the comparison result, and respectively adjusting the current frequency and the current voltage of the processing system to the working frequency and the working voltage includes:

obtaining constraint information, where the constraint information includes one or more of the following: frequency information of a memory connected to the processing system, frequency information of a level 3 cache connected to the processing system, and a configuration policy of software running on the processing system; and when the working frequency and the working voltage meet a requirement of the constraint information, respectively adjusting the current frequency and the current voltage of the processing system to the working frequency and the working voltage.

In a possible implementation, the method further includes:

when the working frequency and the working voltage do not meet the requirement of the constraint information, updating the working frequency and the working voltage based on the constraint information and the comparison result, and respectively adjusting the current frequency and the current voltage of the processing system to an updated working frequency and an updated working voltage.

In a possible implementation, comparing the first performance parameter with the second performance parameter to obtain the comparison result includes:

comparing the first performance parameter with the second performance parameter to obtain a performance difference or a performance ratio; and determining a frequency scaling factor of the processing system based on a frequency difference or a frequency ratio and the performance difference or the performance ratio, where the frequency scaling factor represents a relationship between a performance change and a frequency change of the processing system; the comparison result includes the frequency scaling factor; and the frequency difference is a difference between the first frequency and the second frequency, and the frequency ratio is a ratio of the first frequency to the second frequency.

In a possible implementation, controlling the processing system to be at the target frequency includes: controlling, based on pre-configuration information, the processing system to switch between the first frequency and the second frequency in a time-division manner, where the pre-configuration information includes duration of the first frequency and duration of the second frequency.

In a possible implementation, the processing system includes one or more of the following: a processor core, a level 1 cache, and a level 2 cache.

In a possible implementation, the first performance parameter includes a first operation speed, and the second performance parameter includes a second operation speed.

According to a third aspect, an embodiment of this application provides a computer-readable storage medium, configured to store computer software instructions used by a system for implementing the dynamic voltage and frequency scaling method provided in one or more implementations of the first aspect. The computer software instructions include a program designed for executing the foregoing aspects.

According to a fourth aspect, an embodiment of this application provides a computer program. The computer program includes instructions. When the computer program is executed by a computer, the computer is enabled to perform a procedure performed by a system for implementing the dynamic voltage and frequency scaling method provided in one or more implementations of the first aspect.

According to a fifth aspect, an embodiment of this application provides a terminal device. The terminal device includes a processor, and the processor is configured to support the terminal device in implementing a corresponding function in the dynamic voltage and frequency scaling method provided in the second aspect. The terminal device may further include a memory. The memory is configured to be coupled to the processor, and the memory stores program instructions and data that are necessary for the terminal device. The terminal device may further include a communication interface, configured to implement communication between the terminal device and another device or a communication network.

According to a sixth aspect, an embodiment of this application provides a chip system. The chip system includes a processor, configured to support a device in implementing a function in the second aspect, for example, generating or processing information in the foregoing dynamic voltage and frequency scaling method. In a possible design, the chip system further includes a memory, and the memory is configured to store program instructions and data that are necessary for the device. The chip system may include a chip, or may include a chip and another discrete component.

**BRIEF DESCRIPTION OF DRAWINGS**

To describe the technical solutions in embodiments of this application or in the background more clearly, the following briefly describes the accompanying drawings for describing embodiments of this application or the background.

FIG. 1a is a diagram of a structure of a terminal device according to an embodiment of this application;
FIG. 1b is a diagram of a structure of another terminal device according to an embodiment of this application;
FIG. 2a is a diagram of a structure of a dynamic voltage and frequency scaling system according to an embodiment of this application;
FIG. 2b is a diagram of frequency control according to an embodiment of this application;
FIG. 2c is a diagram of another frequency control according to an embodiment of this application;
FIG. 2d is a diagram of another frequency control according to an embodiment of this application;
FIG. 2e is a diagram of a waveform of frequency control according to an embodiment of this application;
FIG. 3 is a diagram of a structure of another dynamic voltage and frequency scaling system according to an embodiment of this application;
FIG. 4 is a diagram of a structure of another dynamic voltage and frequency scaling system according to an embodiment of this application;
FIG. 5 is a schematic flowchart of a dynamic voltage and frequency scaling method according to an embodiment of this application;
FIG. 6A and FIG. 6B are a schematic flowchart of dynamic voltage and frequency scaling according to an embodiment of this application; and
FIG. 7 is a diagram of a time sequence of dynamic voltage and frequency scaling according to an embodiment of this application.

**DESCRIPTION OF EMBODIMENTS**

The following describes embodiments of this application with reference to the accompanying drawings in embodiments of this application.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification indicates that a particular feature, structure, or characteristic described with reference to the embodiment may be included in one or more embodiments of this application. The phrase shown in various positions in the specification may not necessarily refer to a same embodiment, and is not an independent or optional embodiment exclusive from another embodiment. It is explicitly and implicitly understood by persons skilled in the art that embodiments described in the specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

Some terms in this application are first described, to help persons skilled in the art have a better understanding.

(1) Dynamic voltage and frequency scaling (dynamic voltage frequency scaling, DVFS): Generally, a working frequency and a working voltage of a chip may be dynamically adjusted based on different requirements of an application running on the chip for a computing capability (for a same chip, a higher frequency requires a higher voltage), to achieve an objective of energy saving. In embodiments of this application, in a running process of a computer, a frequency of a processing system (including one or more of the following: a processor core, a level 1 cache, and a level 2 cache) may be adjusted, so that the processing system may be in different states. In addition, performance of the processing system in different states is sampled and compared, to determine a frequency scaling factor of the processing system, and determine a change relationship between the performance and the frequency of the processing system. In this way, the frequency and the voltage of the processing system can be accurately adjusted to the working voltage and the working frequency in real time, and the processing system can be stabilized at a balance point between performance and energy consumption in real time, so that an energy efficiency ratio is increased.

(2) Frequency scaling factor (frequency scaling factors): Generally, when a running frequency of the processing system is increased (or decreased), performance (for example, instructions executed per second) of the processing system is correspondingly improved (or deteriorated). A proportion of performance improvement (or deterioration) of the processing system relative to frequency increase (or decrease) of the processing system is a change relationship between the performance and the frequency of the processing system, and is referred to as the frequency scaling factor. In embodiments of this application, the frequency scaling factor of the processing system may be obtained based on comparison between different performance of the processing system at different frequencies.

(3) DVFS procedure: When the processing system has some performance bottlenecks, the DVFS may decrease frequencies and voltages of non-performance-critical components (for example, components with low utilization), to reduce energy consumption of these components. After the performance bottleneck is changed, a voltage and a frequency of a performance-critical component (for example, a component with high utilization) are increased to maintain performance. When a frequency and a voltage are adjusted, refer to the following principle: When the frequency is adjusted from high to low, the frequency is first decreased and then the voltage is decreased. On the contrary, when the frequency is adjusted from low to high, the voltage is first increased and then the frequency is increased.

(4) A phase-locked loop: The phase-locked loop is a technology that implements frequency and phase synchronization by using a feedback control principle, and a function of the phase-locked loop is to synchronize a clock output by a circuit with an external reference clock. When a frequency or a phase of the reference clock changes, the phase-locked loop detects the change and adjusts an output frequency through an internal feedback system until the two clocks are synchronized again. This synchronization is called "phase-locked". In embodiments of this application, the phase-locked loop may generate and output a plurality of frequencies.

(5) "A plurality of" in this application means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

First, a technical problem to be specifically resolved in this application is analyzed and proposed. Common DVFS solutions include the following solution 1, solution 2, and solution 3.

Solution 1: Information such as a preset classification of a program, an I/O feature, processor utilization, a scheduling delay, and processor cluster allocation are collected. The information is controlled by using independent proportional-integral-derivative controllers (proportional-integral-derivative controllers, PID Controllers). Outputs of independent proportional-integral-differential controller loops are combined based on a specific weight, to calculate a minimum performance requirement. Then, a pre-configured table is looked up based on the minimum performance requirement, to determine a frequency, a voltage, and core type information. Finally, the frequency, the voltage, and core scheduling information are output for performing a DVFS control operation.

The solution 1 has the following disadvantages.

Real-time performance is poor. The PID controller needs to perform, based on a long-time average result of the foregoing information, DVFS control, and cannot adapt to a requirement of a complex environment for a DVFS control capability with a high-speed response due to the poor real-time performance. This affects an energy efficiency gain brought by the DVFS control.

An algorithm structure is complex. The foregoing information needs to be separately processed by a corresponding PID controller, and processing results further need to be combined based on weights. In this case, an algorithm structure is complex, a processing process is slow, and a possibility of hardware implementation is low. In other words, a possibility of implementing the solution on hardware is limited, and the real-time performance is further limited.

Accuracy of the DVFS control is low. A granularity of the foregoing information is coarse, in other words, the PID controller performs processing based on the coarse-granularity information. Consequently, the accuracy of the DVFS control is low, and an energy efficiency gain of the DVFS is affected. For example, in some application scenarios, after a frequency is decreased to a specific level, a performance loss of the program is small, but energy efficiency can be greatly improved. However, in the solution 1 in which DVFS processing is performed based on the coarse-granularity information, this scenario cannot be detected and identified.

Solution 2: A system on chip (system on chip, SOC) information collection unit collects a load status (SOC-load) of an SOC. Then, a performance requirement of a processor is determined through SOC load calculation. Then, a DVFS table selection unit is used to convert the performance requirement of the processor into frequency and voltage information of the DVFS control. Finally, a DVFS operation control unit controls a supply voltage of the SOC based on the frequency and voltage information.

The solution 2 has the following disadvantages:

Accuracy and real-time performance of the DVFS control are poor. Only using a system load (SOC-load) as a basis for DVFS adjustment cannot accurately reflect the performance requirement of the processor, and therefore cannot ensure the accuracy of the DVFS. In this case, it is difficult to obtain a better energy efficiency ratio. In addition, the load changes slowly, and a response for performing DVFS based only on the load is slow, and consequently, requirements of scenarios that require high real-time performance cannot be met.

Solution 3: First, a first counter is used to collect statistics on activity time of a processor core. Then, a second counter is used to collect statistics on time when work of the processor core is suspended due to a lack of the level 3 cache. A frequency scaling factor of the processor core is predicted by using two factors, namely, the activity time of the processor core and the time when work of the processor core is suspended.

The solution 3 has the following disadvantages:

Accuracy of the DVFS control is poor, and there are a few application scenarios. If only the factor, namely, the lack of the level 3 cache is considered, an accuracy requirement of the DVFS cannot be ensured. For example, in a complex scenario, the accuracy of the DVFS control is affected by various factors. In this solution, only the lack of the level 3 cache is considered, and therefore, the accuracy of the DVFS cannot be ensured.

In view of this, this application provides a dynamic voltage and frequency scaling system. In a running process of a computer, a frequency of a processing system may be adjusted, so that the processing system may be in different states. In addition, performance of the processing system in different states is sampled and compared, to determine a frequency scaling factor of the processing system. This avoids using a complex prediction model or prediction algorithm to predict the frequency scaling factor. Instead, a change relationship between the performance and the frequency of the processing system is determined based on an actual frequency change and an actual performance change. In this way, the frequency and the voltage of the processing system can be accurately adjusted to a working voltage and a working frequency in real time, and the processing system is stabilized at a balance point between performance and energy consumption in real time, so that an energy efficiency ratio is increased.

To better understand the dynamic voltage and frequency scaling system provided in embodiments of this application, the following describes a system architecture and/or an application scenario of the dynamic voltage and frequency scaling system provided in embodiments of this application. It can be understood that the system architecture and the application scenario described in embodiments of this application are intended to describe technical solutions in embodiments of this application more clearly, and do not constitute a limitation on the technical solutions provided in embodiments of this application.

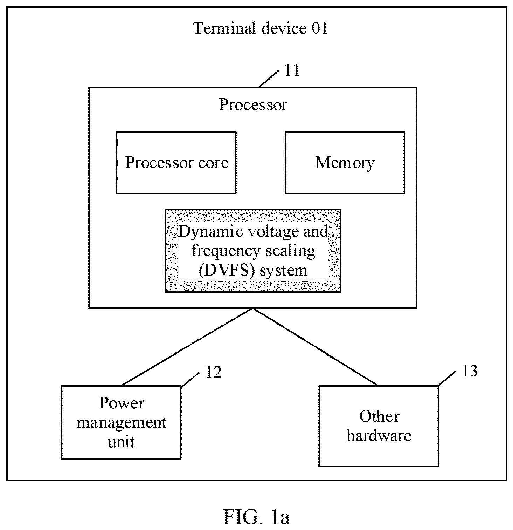

FIG. 1a is a diagram of a structure of a terminal device according to an embodiment of this application. A terminal device 01 provided in this application may include one or more processors 11, one or more power management units (power management unit, PMU) 12, and other hardware 13. The terminal device 01 may be a subscriber unit (subscriber unit), a cellular phone (cellular phone), a smartphone (smartphone), a personal computer (personal computer, PC), a personal digital assistant (personal digital assistant, PDA) computer, a tablet computer, a handset (Handset), a laptop computer (Laptop Computer), a machine type communication (machine type communication, MTC) terminal, a smart wearable device, or the like. It may be understood that, in embodiments of this application, one terminal device may correspond to one computer, or one terminal device may also be referred to as one computer.

The processor 11 may be a central processing unit (CPU), a graphics processing unit (GPU), or a chip having another function (for example, an SOC or a programmable system-on-chip (programmable system-on-chip, PSOC)). The processor 11 may include one or more processor cores and one or more memories. The CPU may be configured to: process instructions, perform an operation, control time, process data, and the like. To be specific, the CPU is mainly configured to: interpret computer instructions and process data in computer software; for an operation in a computer, the CPU may be responsible for reading the instructions, decoding the instructions, and executing the instructions; and the GPU is a microprocessor that performs image computing on the computer, and mainly performs complex mathematical and geometric computing to complete graphics rendering. In embodiments of this application, the processor 11 may include a dynamic voltage and frequency scaling system. In this case, a frequency of the processing system may be adjusted by using the dynamic voltage and frequency scaling system, so that the processing system may be in different states. In addition, performance of the processing system in different states is sampled and compared, to determine a frequency scaling factor of the processing system, and determine a change relationship between the performance and the frequency of the processing system. In this way, the frequency and the voltage of the processing system can be accurately adjusted to a working voltage and a working frequency in real time, and the processing system can be stabilized at a balance point between performance and energy consumption in real time, so that an energy efficiency ratio is increased.

The memory is configured to store preparation data required by the processor 11 to execute a task, intermediate data generated in a process of executing the task, and result data obtained after the task is completed. The memory may include one or more local memories (local memory), one or more registers (Register), one or more level 1 caches (L1 Cache), one or more level 2 caches (L2 Cache), various buffers (buffer), and the like, and further include another external memory (not shown in the figure).

The power management unit 12 may include a power input and power management chip. The power management unit 12 is separately connected to the processor 11 and the other hardware 13. The power management unit 12 may be configured to supply power to the processor 11 and the other hardware 13. The power management unit 12 may also receive control information sent by the dynamic voltage and frequency scaling system in the processor 11, and adjust, based on the control information, a voltage provided to the processing system. The control information is used by the dynamic voltage and frequency scaling system to adjust a frequency of the processing system, so that the processing system may be in different states. In addition, performance of the processing system in different states is sampled and compared, to determine the frequency scaling factor of the processing system, and determine the relationship between the performance and the frequency of the processing system.

The other hardware 13 may include a linear voltage stabilizer, a phase-locked loop (phase-locked loop, PLL), a display, a camera, various I/O interfaces, various sensors, and the like. The PLL may be configured to: generate a plurality of frequencies and output the plurality of frequencies. The linear voltage stabilizer may be configured to perform conversion processing on an output of the power management unit 12, to output a plurality of voltages.

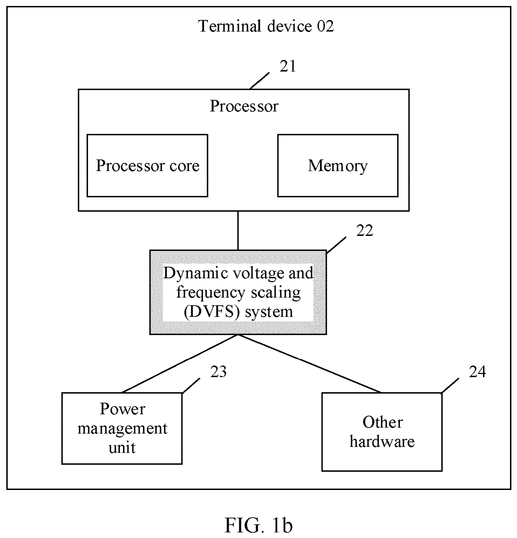

In a possible implementation, the processor in the terminal device provided in this application may not include the dynamic voltage and frequency scaling system. In other words, the dynamic voltage and frequency scaling system may be implemented by using a separate chip, instead of being integrated into a chip of the processor. FIG. 1b is a diagram of a structure of another terminal device according to an embodiment of this application. A terminal device 02 provided in this application may include one or more processors 21, one or more dynamic voltage and frequency scaling systems 22, one or more power management units 23, and other hardware 24. For functions and connection relationships of units in the terminal device 02, refer to related descriptions of the terminal device 01. Details are not described herein again.

It should be noted that embodiments of this application may be applied to various system architectures of a computer device. The architecture of the computer device in the foregoing figure is merely an example implementation in embodiments of this application. An architecture to which embodiments of this application may be applied includes but is not limited to the foregoing architecture. It should be understood that the architecture of the computer device may have more or fewer units/modules than those shown in the figure, or may combine two or more units/modules, or may have different unit/module configurations. The units/modules shown in the figure may be implemented in hardware that includes one or more signal processing circuits and/or application-specific integrated circuits, software, or a combination of hardware and software.

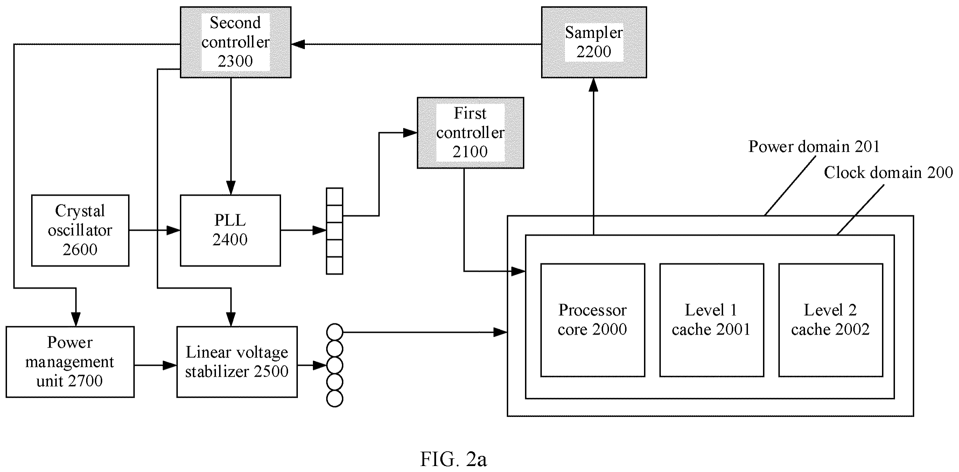

The following describes embodiments of this application with reference to the accompanying drawings in embodiments of this application. For ease of understanding, a structure of the dynamic voltage and frequency scaling system provided in this application is first described by using a scenario in which the terminal device includes a single processor core as an example. FIG. 2a is a diagram of a structure of a dynamic voltage and frequency scaling system according to an embodiment of this application. The dynamic voltage and frequency scaling system may include a first controller 2100, a sampler 2200, and a second controller 2300. The dynamic voltage and frequency scaling system may adjust a frequency of a processing system (including one or more of the following: a processor core, a level 1 cache, and a level 2 cache) of a terminal device, so that the processing system may be in different states. In addition, performance of the processing system in different states is sampled and compared, to determine a frequency scaling factor of the processing system, and determine a change relationship between the performance and the frequency of the processing system. In this way, the frequency and the voltage of the processing system can be accurately adjusted to a working voltage and a working frequency in real time, and the processing system can be stabilized at a balance point between performance and energy consumption in real time, so that an energy efficiency ratio is increased.

The first controller 2100 may control the processing system to be at a target frequency, where the target frequency includes at least a first frequency and a second frequency.

Optionally, the first controller 2100 may control, by using pre-configuration information, the processing system to switch between the first frequency and the second frequency. The pre-configuration information may include duration of the first frequency and duration of the second frequency, so that the sampler 2200 can sample performance of the processing system at a specific time interval. The duration of the first frequency and the duration of the second frequency may be configured by a processor (or an operating system) based on requirements of different services (for example, services such as a game, a video, music, and social interaction software). For example, for a service with a high real-time requirement (for example, a service like a game or social interaction software), the duration of the first frequency and the duration of the second frequency may be configured to be shorter. For a service with a low real-time requirement (for example, a service like as a video or music), the duration of the first frequency and the duration of the second frequency may be configured to be longer. This is not specifically limited herein. It may be understood that the duration of the first frequency may be equal to or different from the duration of the second frequency.

Optionally, the processing system may include one or more of the following: a processor core, a level 1 cache, and a level 2 cache. For ease of understanding, an example in which the processing system includes the processor core, the level 1 cache, and the level 2 cache is used. The processor core, the level 1 cache, and the level 2 cache may be located in a same clock domain and a same power domain, or may be located in different clock domains and different power domains. In other words, the processor core, the level 1 cache, and the level 2 cache may work at a same frequency and a same voltage, and the frequency and the voltage may be uniformly adjusted. The processor core, the level 1 cache, and the level 2 cache may alternatively work at different frequencies and different voltages, and respective frequencies and voltages of the processor core, the level 1 cache, and the level 2 cache may be adjusted separately without affecting each other.

For example, when the first controller 2100 needs to control the processing system to be at the first frequency, the first controller 2100 may control a frequency provided by a PLL 2400 to be the first frequency, and transmit the first frequency to a processor core 2000, a level 1 cache 2001, and a level 2 cache 2002 in a clock domain 200. In this case, the processor core 2000, the level 1 cache 2001, and the level 2 cache 2002 work at the first frequency and are in a first state. The frequency of the PLL 2400 may be a frequency in a plurality of frequency outputs generated after a frequency multiplication operation is performed on an external frequency input by a crystal oscillator 2600. Each of the plurality of frequencies generated by the PLL 2400 may be output to an independent clock domain.

For example, when the first controller 2100 needs to control the processing system to be at the second frequency, the first controller 2100 may control the frequency provided by the PLL 2400 to be the second frequency, to adjust the frequency of the processing system to the second frequency. In other words, the first controller 2100 may adjust frequencies of the processor core 2000, the level 1 cache 2001, and the level 2 cache 2002 in the clock domain 200 from the first frequency to the second frequency, so that the processor core 2000, the level 1 cache 2001, and the level 2 cache 2002 work at the second frequency and are in a second state.

It should be noted that a relationship between the first frequency and the second frequency includes that the first frequency is greater than the second frequency, or the first frequency is less than the second frequency. If the first frequency is greater than the second frequency, the first controller 2100 decreases the frequency of the processing system from the first frequency to the second frequency, performance of the processing system is partially lost, and the voltage of the processing system may remain unchanged, or may be decreased with the frequency. It may be understood that, when the frequency is decreased, the voltage may not be decreased, to further improve real-time performance of the DVFS as voltage adjustment is usually slow. If the first frequency is less than the second frequency, to increase the frequency of the processing system from the first frequency to the second frequency, the first controller 2100 may first increase the voltage of the processing system, and then increase the frequency.

Optionally, the target frequency may further include another frequency (for example, a third frequency or a fourth frequency). It may be understood that duration may also be pre-configured for the third frequency, the fourth frequency, or the like. When the first controller 2100 adjusts the frequency of the processing system from the first frequency to the second frequency, large-amplitude frequency adjustment may be performed, for example, the frequency is directly adjusted from the first frequency to the second frequency. Alternatively, small-amplitude frequency adjustment may be performed, for example, the frequency is first adjusted from the first frequency to the third frequency, then adjusted to the fourth frequency, and finally adjusted to the second frequency (in this case, values of the third frequency and the fourth frequency are between the first frequency and the second frequency). For example, the first controller 2100 may determine, based on a requirement of the computer, to perform large-amplitude frequency adjustment or small-amplitude frequency adjustment. For example, when the computer needs a protection voltage, the first controller 2100 may perform small-amplitude frequency adjustment, that is, continuously adjust the frequency at a specific interval, to protect a voltage. For example, when a temperature of computer hardware is excessively high and needs to be reduced, the frequency may be directly decreased from the first frequency to the second frequency (in this case, the first frequency is greater than the second frequency), so that the frequency is greatly and quickly decreased, and the temperature of the hardware is further reduced.

The sampler 2200 may be configured to: sample performance of the processing system at the first frequency and performance of the processing system at the second frequency, to obtain a first performance parameter and a second performance parameter; and compare the first performance parameter with the second performance parameter to obtain a comparison result.

Optionally, the performance parameter (namely, the first performance parameter and the second performance parameter) may include an operation speed (namely, a first operation speed and a second operation speed). The operation speed may be instructions per second processed by the processing system, for example, a million instructions per second (million instructions per second, MIPS), or may be instructions per cycle (instructions per cycle, IPC) executed by the processing system. It may be understood that the foregoing performance parameter may alternatively be another parameter that may be used to describe the performance of the processing system, for example, a benchmark score. The benchmark score is a score obtained by testing the computer by using related software, to evaluate performance of the computer. A higher benchmark score indicates better performance of the computer.

For example, when the first controller 2100 controls the frequency of the processing system to be at the first frequency, the processor core 2000, the level 1 cache 2001, and the level 2 cache 2002 work at the first frequency, that is, the processing system is in the first state. The sampler 2200 may sample the performance parameter of the processing system in the first state, to obtain the first performance parameter.

When the first controller 2100 adjusts the frequency of the processing system (for example, the processor core 2000, the level 1 cache 2001, and the level 2 cache 2002 in the clock domain 200) from the first frequency to the second frequency, the processor core 2000, the level 1 cache 2001, and the level 2 cache 2002 work at the second frequency. In this case, the processing system is in the second state. The sampler 2200 may sample the performance parameter of the processing system in the second state, to obtain a second performance parameter.

Optionally, for a design in which the first controller 2100 implements frequency control, refer to any one of the following solutions:

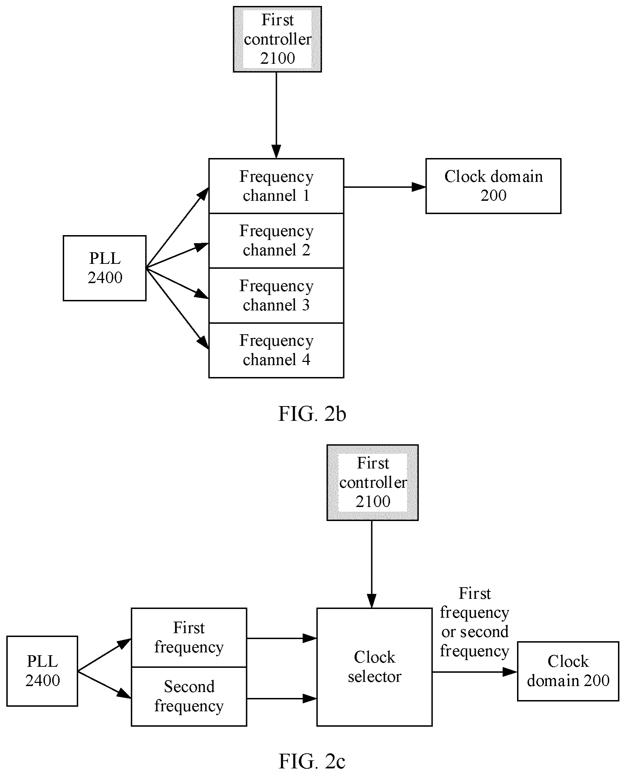

Solution 1: FIG. 2b is a diagram of frequency control according to an embodiment of this application. The PLL 2400 may be implemented based on a fractional frequency divider, to generate a plurality of clocks (for example, a frequency channel 1, a frequency channel 2, a frequency channel 3, and a frequency channel 4). The first controller 2100 may select a frequency of one of the frequency channels and provide the frequency to the processing system. For example, a frequency of the frequency channel 1 is the first frequency, and a frequency of the frequency channel 2 is the second frequency. When the first controller 2100 needs to control the frequency of the processing system to be at the first frequency, the frequency of the frequency channel 1 may be selected and provided to the processing system. After a period of time (duration of the first frequency), when the first controller 2100 needs to adjust the frequency of the processing system to the second frequency, the frequency of the frequency channel 2 may be selected and provided to the processing system.

Solution 2: FIG. 2c is a diagram of another frequency control according to an embodiment of this application. The PLL 2400 may output dual frequencies (for example, the first frequency and the second frequency), and the first controller may select a frequency from the dual frequencies by using a clock selector, to quickly switch the processing system between different frequencies. For example, when the first controller 2100 needs to control the frequency of the processing system to the first frequency, the clock selector may select the first frequency and provide the first frequency to the processing system. After a period of time (duration of the first frequency), when the first controller 2100 needs to adjust the frequency of the processing system to the second frequency, the clock selector may select the second frequency and provide the second frequency to the processing system.

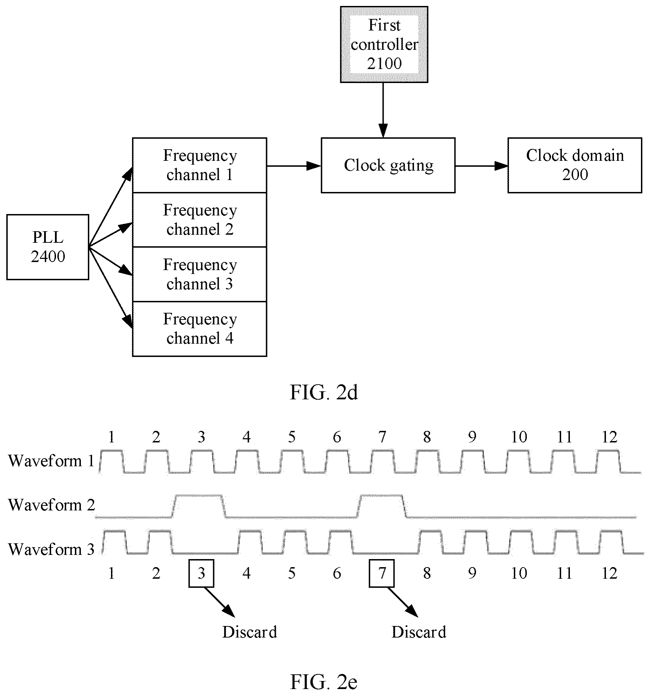

Solution 3: FIG. 2d is a diagram of another frequency control according to an embodiment of this application. The PLL 2400 may generate a plurality of clocks, and the first controller 2100 may perform frequency control through clock gating. For example, the first controller 2100 may periodically (or randomly) discard, through clock gating, some pulses of a clock output by the frequency channel in proportion, to form an equivalent low-frequency clock. This is equivalent to frequency decrease. FIG. 2e is a diagram of a waveform of frequency control according to an embodiment of this application. An output of a frequency channel of the PLL 2400 may be a waveform (waveform 1) with 12 pulses, a throttling signal output by the first controller 2100 may be a waveform (waveform 2) with two pulses, and a signal finally output through clock gating is a waveform (waveform 3) with 10 pulses. In this case, two pulses are discarded. This is equivalent to frequency decrease.

After obtaining the first performance parameter and the second performance parameter through sampling, the sampler 2200 may compare the first performance parameter with the second performance parameter to obtain a comparison result. The comparison result may include a frequency scaling factor, and the frequency scaling factor may indicate a relationship between a performance change and a frequency change of the processing system, for example, indicate an amplitude of frequency decrease (or increase) and an amplitude of performance deterioration (or improvement), or a frequency decrease (or increase) percentage and a performance deterioration (or improvement) percentage of the processing system.

In a possible implementation, the sampler 2200 compares the first performance parameter with the second performance parameter to obtain a performance difference or a performance ratio. Then, the sampler 2200 may determine the frequency scaling factor based on a frequency difference or a frequency ratio and the performance difference or the performance ratio. The frequency difference is a difference between the first frequency and the second frequency, and the frequency ratio is a ratio of the first frequency to the second frequency.

Optionally, the frequency scaling factor may be determined based on the frequency difference and the performance difference. For example, the frequency scaling factor may satisfy Formula 1.1:

$$S = \frac{MIPS_{Normal} - MIPS_{Sample}}{Frequency_{Normal} - Frequency_{Sample}}$$

The performance parameter of the processing system may be represented by MIPS. Frequency represents a frequency at which the processing system operates. Normal may represent that the processing system works at the first frequency. Sample may represent that the processing system works at the second frequency. S represents the frequency scaling factor. For ease of understanding, an example in which the first frequency is greater than the second frequency is used herein. Because the MIPS is also increased when the frequency is increased, the frequency scaling factor in the foregoing formula is usually a positive number. Optionally, a unit of the frequency scaling factor S may be MIPS/MHz or MIPS/GHz.

Optionally, the frequency scaling factor may be determined based on the frequency ratio and the performance ratio. For example, the frequency scaling factor may satisfy Formula 1.2:

$$S = \frac{1 - \dfrac{MIPS_{Sample}}{MIPS_{Normal}}}{1 - \dfrac{Frequency_{Sample}}{Frequency_{Normal}}}$$

The performance parameter of the processing system may be represented by MIPS. Frequency represents a frequency at which the processing system operates. Normal may represent that the processing system works at the first frequency. Sample may represent that the processing system works at the second frequency. S represents the frequency scaling factor. In the foregoing formula, a relative change rate is used to describe the frequency scaling factor, and the finally output frequency scaling factor S is dimensionless.

Optionally, the frequency scaling factor may be determined based on the frequency ratio and the performance difference. For example, the frequency scaling factor may satisfy Formula 1.3:

$$S = \frac{MIPS_{Normal} - MIPS_{Sample}}{1 - \frac{Frequency_{Sample}}{Frequency_{Normal}}}$$

The performance parameter of the processing system may be represented by MIPS. Frequency represents a frequency at which the processing system operates. Normal may represent that the processing system works at the first frequency. Sample may represent that the processing system works at the second frequency. S represents the frequency scaling factor. On the right side of the foregoing formula, the numerator is an absolute value, the denominator is a relative value, and a unit of the finally output frequency scaling factor S may be MIPS.

Optionally, the frequency scaling factor may be determined based on the frequency difference and the performance ratio. For example, the frequency scaling factor may satisfy Formula 1.4:

$$S = \frac{1 - \frac{MIPS_{Sample}}{MIPS_{Normal}}}{Frequency_{Normal} - Frequency_{Sample}}$$

The performance parameter of the processing system may be represented by MIPS. Frequency represents a frequency at which the processing system operates. Normal may represent that the processing system works at the first frequency. Sample may represent that the processing system works at the second frequency. S represents the frequency scaling factor. On the right side of the foregoing formula, the numerator is a relative value, the denominator is an absolute value, and a unit of the finally output frequency scaling factor S may be 1/MHz or 1/GHz.

In a possible implementation, the first performance parameter and the second performance parameter may alternatively be instructions per cycle (IPC) executed by the processing system or benchmark scores. For example, the performance parameter (including the first performance parameter and the second performance parameter) is IPC. The frequency scaling factor may be determined based on the frequency difference and the performance difference. For example, the frequency scaling factor may satisfy Formula 2.1:

$$S = \frac{IPC_{Normal} - IPC_{Sample}}{Frequency_{Normal} - Frequency_{Sample}}$$

The performance parameter of the processing system may be represented by IPC. Frequency represents a frequency at which the processing system operates. Normal may represent that the processing system works at the first frequency. Sample may represent that the processing system works at the second frequency. S represents the frequency scaling factor. For ease of understanding, an example in which the first frequency is greater than the second frequency is used herein. Because the IPC is generally decreased or remains unchanged when the frequency is increased, the frequency scaling factor in the foregoing formula may be a negative number. Optionally, a unit of the frequency scaling factor S may be 1/MHz or 1/GHz.

It may be understood that the MIPS parameters in Formula 1.2, Formula 1.3, and Formula 1.4 may also be correspondingly adjusted to IPC, so that following Formula 2.2, Formula 2.3, and Formula 2.4 may be respectively obtained.

Optionally, the frequency scaling factor may satisfy Formula 2.2:

$$S = \frac{1 - \frac{IPC_{Sample}}{IPC_{Normal}}}{1 - \frac{Frequency_{Sample}}{Frequency_{Normal}}}$$

Optionally, the frequency scaling factor may satisfy Formula 2.3:

$$S = \frac{IPC_{Normal} - IPC_{Sample}}{1 - \frac{Frequency_{Sample}}{Frequency_{Normal}}}$$

Optionally, the frequency scaling factor may satisfy Formula 2.4:

$$S = \frac{1 - \frac{IPC_{Sample}}{IPC_{Normal}}}{Frequency_{Normal} - Frequency_{Sample}}$$

For related descriptions of Formula 2.2, Formula 2.3, and Formula 2.4, refer to related descriptions of Formula 1.1, Formula 1.2, Formula 1.3, Formula 1.4, and Formula 2.1. Details are not described herein again.

Optionally, when the target frequency further includes another frequency (for example, a third frequency or a fourth frequency), the first controller 2100 adjusts the frequency of the processing system from the first frequency to the second frequency through small-amplitude frequency adjustment, for example, first adjusts the frequency from the first frequency to the third frequency, then adjusts the frequency to the fourth frequency, and finally adjusts the frequency to the second frequency (in this case, values of the third frequency and the fourth frequency are between the first frequency and the second frequency). The sampler 2200 may also sample performance parameters of the processing system at the third frequency and the fourth frequency, to obtain a third performance parameter and a fourth performance parameter. Then, the sampler 2200 may also separately compare the third performance parameter and the fourth performance parameter with the first performance parameter, to obtain comparison results at different frequencies.

After the sampler 2200 obtains the first performance parameter and the second performance parameter of the processing system through sampling and compares the first performance parameter with the second performance parameter to obtain a comparison result, the second controller 2300 may determine a working frequency and a working voltage of the processing system based on the comparison result, and respectively adjust a current frequency and a current voltage of the processing system to the working frequency and the working voltage that are determined. Optionally, the second controller 2300 may obtain constraint information, and then determine a working frequency and a working voltage of the processing system based on the constraint information and a comparison result. The constraint information includes one or more of the following: frequency information of a memory connected to the processing system, frequency information of a level 3 cache connected to the processing system, and a configuration policy of software running on the processing system. Optionally, the constraint information may be obtained when the second controller 2300 interacts with the operating system. After obtaining the constraint information and the comparison result of the sampler 2200, the second controller 2300 may first determine whether a working frequency and a working voltage that correspond to the comparison result meet a requirement of the constraint information. When the working frequency and the working voltage meet the requirement of the constraint information, the second controller 2300 may respectively adjust the current frequency and the current voltage of the processing system to the working frequency and the working voltage. When the working frequency and the working voltage do not meet the requirement of the constraint information, the second controller 2300 may update the working frequency and the working voltage based on the constraint information and the comparison result, and respectively adjust the current frequency and the current voltage of the processing system to an updated working frequency and an updated working voltage.

For example, during frequency adjustment, the second controller 2300 may control the PLL 2400 by using control information, to accurately adjust a frequency output to the clock domain 200. During voltage adjustment, the second controller 2300 may control a linear voltage stabilizer 2500 by using the control information, to accurately adjust a voltage output to the power domain 201. It should be noted that, if the voltage needs to be greatly adjusted, the second controller 2300 may further output a signal to the power management unit 2700, to control a power management chip to generate a corresponding required voltage.

Optionally, after obtaining the frequency scaling factor, the second controller 2300 may collaboratively perform decision-making with reference to constraint information of firmware or the operating system of the terminal device, and finally determine to perform operations of increasing a frequency and increasing a voltage, or operations of decreasing a frequency and decreasing a voltage, or operations of maintaining a frequency and a voltage. The constraint information of the firmware or the operating system of the terminal device may include the following.

(1) A current working mode of the processing system, for example, a power-saving mode or a high-performance mode, where in the power-saving mode, the processing system can tolerate specific performance deterioration to increase the energy efficiency ratio. In the high performance mode, the processing system can tolerate only slight performance deterioration. For example, the second controller 2300 can estimate, based on the frequency scaling factor, a performance loss caused by frequency decrease. If the processing system can tolerate the performance loss, the second controller 2300 can decide to perform the operation of decreasing a frequency and decreasing a voltage. A performance deterioration threshold that can be tolerated by the processing system is determined by a current working mode of the processing system. For example, the performance deterioration threshold that can be tolerated by the processing system in the power-saving mode is 5%, and the performance deterioration threshold that can be tolerated by the processing system in the high performance mode is 2%. It may be understood that the performance deterioration threshold may alternatively be another value. This is not specifically limited herein.

(2) A current thermal management status of the processing system, for example, the chip being close to an overheated state, where the processing system needs to reduce a heat load by decreasing a frequency and a voltage. Optionally, in the following scenario in which the terminal device includes a plurality of processor cores, the second controller 2300 may select, with reference to frequency scaling factors of different processor cores, a processor core whose frequency has small impact on performance to perform the frequency decrease operation, so that an overall performance loss of the terminal device is minimized, and the heat load of the processing system is reduced.

(3) When the processing system performs an overclocking operation in exchange for performance, a frequency scaling factor of the processor core under a current service load needs to be checked. For a service whose performance is insensitive to a frequency, performance improvement caused by overclocking is small. In this case, an overclocking process is stopped.

(4) Priority of a service processed by the processing system, where the second controller 2300 performs decision-making with reference to a frequency scaling factor used when the service runs on the processor core. For example, for a service with a low priority, the processing system running the service may preferably consider to decrease a frequency. For a service with a high priority and performance insensitive to a frequency, the processing system running the service may preferably consider to decrease a frequency. For a service with a high priority and performance sensitive to a frequency, the processing system running the service may preferably consider to increase a frequency.

(5) For a plurality of processor cores in a same processor cluster, operations of decreasing a frequency and decreasing a voltage, or operations of increasing a frequency and increasing a voltage or operations of maintaining a frequency and maintaining a voltage needs to be integrally performed. Optionally, the second controller 2300 may first separately calculate frequency scaling factors of a plurality of processor cores in a same processor cluster, and then perform comprehensive decision-making with reference to a priority of a service running on each processor core or usage of each processor core, to determine whether to integrally decrease a frequency and decrease a voltage, or increase a frequency and increase a voltage, or maintain a frequency and maintain a voltage.

(6) Other factors, where after calculating the frequency scaling factor of each processor core, the second controller 2300 may perform decision-making with reference to a bandwidth and a command queue usage of the level 3 cache, and a bandwidth and a command queue usage of the memory. For example, a frequency adjustment policy of the processor core, a frequency adjustment policy of the level 3 cache, and a frequency adjustment policy of the memory are determined, and then linkage control is performed.

For example, the processing system is in a normal running state, and a frequency in this case is a normal running frequency (for example, the first frequency). For example, the first frequency (for example, 5.6 GHz) is greater than the second frequency (for example, 5.2 GHz), the performance of the processing system at the first frequency is normal performance (for example, 9000 MIPS), and the performance of the processing system at the second frequency is frequency decrease performance (for example, 8800 MIPS). After comparing the normal performance with the frequency decrease performance, the second controller 2300 may determine the second frequency as the working frequency, obtain a voltage corresponding to the second frequency through table lookup, and determine the voltage corresponding to the second frequency as the working voltage. It can be learned that when the frequency of the processing system is decreased from the first frequency to the second frequency, the frequency is decreased by 0.4 GHz, and the performance of the processing system is deteriorated by 200 MIPS, that is, the performance is deteriorated by 2.22%. A manner of determining the frequency scaling factor based on the frequency difference and the performance difference is used as an example. It may be determined that the frequency scaling factor S is 500 MIPS/GHz, indicating that under a current load, the frequency of the processing system is decreased by 1 GHz, and the performance is deteriorated by 500 MIPS. In the configuration policy of the software included in the constraint information, the performance deterioration threshold that can be tolerated by the processing system in the power-saving mode is 5%, and the performance deterioration threshold that can be tolerated by the processing system in the high performance mode is 2%. It is assumed that the terminal device is in the power-saving mode in this case. As shown in the foregoing example, when the frequency is decreased from the first frequency (5.6 GHz) to the second frequency (5.2 GHz), performance is deteriorated by 2.22%. It can be learned that a performance deterioration proportion after the frequency adjustment is less than the performance deterioration threshold 5%, and can be tolerated by the processing system. In this case, the second controller 2300 may adjust the frequency of the processing system to the second frequency (5.2 GHz), and adjust the voltage of the processing system to a voltage corresponding to the second frequency (the voltage corresponding to the second frequency may be obtained through table lookup).

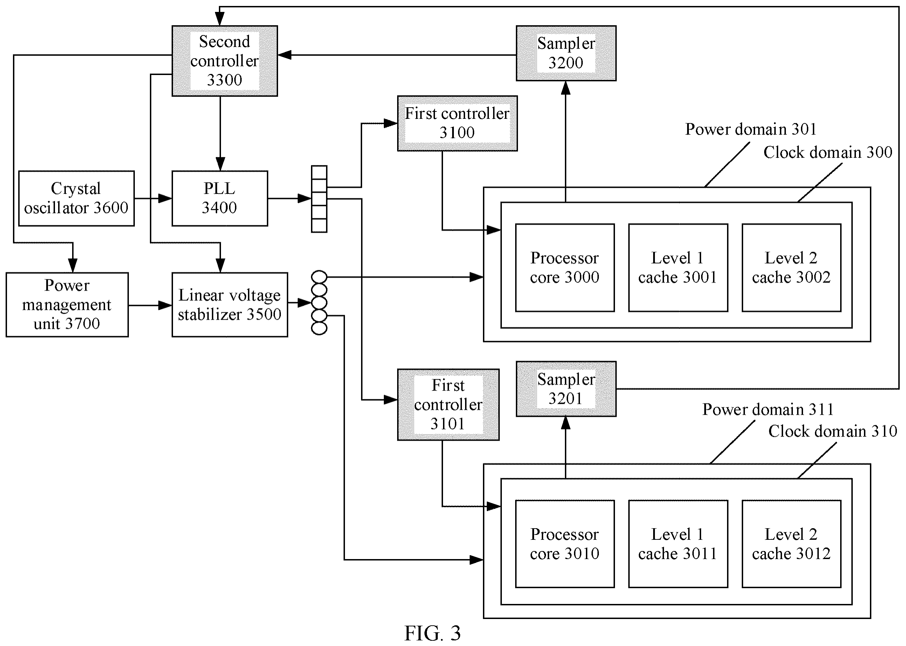

A structure of the dynamic voltage and frequency scaling system provided in this application is described by using an example in which the terminal device includes a plurality of processor cores and each processor core may be independently controlled. FIG. 3 is a diagram of a structure of another dynamic voltage and frequency scaling system according to an embodiment of this application. The dynamic voltage and frequency scaling system may include a plurality of first controllers (for example, a first controller 3100 and a first controller 3101), a plurality of samplers (for example, a sampler 3200 and a sampler 3201) and a second controller 3300. The dynamic voltage and frequency scaling system may adjust frequencies of different processing systems (each including one or more of the following: a processor core, a level 1 cache, and a level 2 cache) of a terminal device, so that the different processing systems may be in different states. In addition, performance of different processing systems in different states is sampled and compared, to determine frequency scaling factors of the different processing systems, and determine a change relationship between the performance and the frequency of each processing system. In this way, frequencies and voltages of different processing systems may be respectively adjusted to a working voltage and a working frequency in real time and accurately, and each processing system is stabilized at a balance point between performance and energy consumption in real time, so that an energy efficiency ratio is increased.

The terminal device may include at least two processing systems (for example, a processing system 1 and a processing system 2) that can independently adjust a voltage and a frequency. The processing system may include one or more of the following: the processor core, the level 1 cache, and the level 2 cache. For example, the processing system may include the processor core, the level 1 cache, and the level 2 cache. In this case, the processing system 1 includes a processor core 3000, a level 1 cache 3001, and a level 2 cache 3002, and the processing system 2 includes a processor core 3010, a level 1 cache 3011, and a level 2 cache 3012.

Optionally, the processor core 3000, the level 1 cache 3001, and the level 2 cache 3002 may be located in an independent power domain 301 and an independent clock domain 300. The processor core 3010, the level 1 cache 3011, and the level 2 cache 3012 may be located in another independent power domain 311 and another independent clock domain 310. Voltage adjustment in different power domains (for example, the power domain 301 and the power domain 311) may be independent, and voltage adjustment manners in different power domains may be similar. Frequency adjustment in different clock domains (for example, the clock domain 300 and the clock domain 310) may be independent, and frequency adjustment manners in different clock domains may be similar.

For example, the first controller 3100 may control a frequency generated by a PLL 3400 to be a first frequency, and send the first frequency to the clock domain 300. In this case, the processor core 3000, the level 1 cache 3001, and the level 2 cache 3002 of the processing system 1 work at the first frequency and are in a first state. The sampler 3200 may collect performance data (for example, MIPS, IPC, or a benchmark score) of the processing system 1 in the first state. For a solution in which the first controller 3100 implements frequency control, refer to related descriptions of the first controller 2100. Details are not described herein again.

After the processing system 1 works at the first frequency for a period of time (namely, duration of the first frequency), the first controller 3100 may decrease a frequency of a clock output by the PLL 3400 to the second frequency (for example, the first frequency is greater than the second frequency), and then provide the clock to the clock domain 300. In this case, the processor core 3000, the level 1 cache 3001, and the level 2 cache 3002 of the processing system 1 work at the second frequency and are in a second state. The sampler 3200 may collect performance data (for example, MIPS, IPC, or a benchmark score) of the processing system 1 in the second state. It may be understood that, after the processing system 1 works at the second frequency for a period of time (namely, duration of the second frequency), the first controller 3100 may restore a frequency from the second frequency to the first frequency, so that the processing system 1 may be restored to the first state. Certainly, the first controller 3100 may further increase the frequency, so that the processing system 1 works at a frequency greater than the first frequency, to obtain higher performance. Alternatively, the first controller 3100 may continue to decrease the frequency, to decrease the frequency from the second frequency to another frequency, and the sampler 3200 may collect performance data of the processing system 1 operating at the another frequency.

After obtaining performance data of the processing system 1 in different states, the sampler 3200 may compare the performance data to calculate a frequency scaling factor of the processing system 1 under a current workload. For descriptions of determining the frequency scaling factor, refer to related descriptions (for example, Formula 1.1 to Formula 2.4) in the foregoing single-processor-core scenario. Details are not described herein again.

It may be understood that, for a process in which the first controller 3101 performs frequency adjustment on the processing system 2 and a process in which the sampler 3201 samples performance of the processing system in different states and determines the frequency scaling factor, refer to the descriptions of the first controller 3100 and the sampler 3200. It should be noted that frequencies of the processing system 1 and the processing system 2 may be independently adjusted and do not affect each other. In other words, when adjusting the frequency of the processing system 2, the first controller 3101 may control the frequency of the processing system 2 to the first frequency or the second frequency, or to another frequency. This is not specifically limited herein.

The sampler 3200 and the sampler 3201 send the frequency scaling factors determined for the processing system 1 and the processing system 2 to the second controller 3300. The second controller 3300 may perform decision-making based on the frequency scaling factors of the processing system 1 and the processing system 2 and with reference to constraint information (for example, frequency information of a memory, frequency information of a level 3 cache, or a configuration policy of software), to determine how to adjust frequencies and voltages of the processing system 1 and the processing system 2. For example, a voltage is increased and a frequency is increased; or a voltage is decreased and a frequency is decreased; or a voltage and a frequency are kept unchanged. For example, during frequency adjustment, the second controller 3300 may control the PLL 3400 by using control information, to accurately adjust frequencies output to the clock domain 300 and the clock domain 310. During voltage adjustment, the second controller 3300 may control a linear voltage stabilizer 3500 by using the control information, to accurately adjust voltages output to the power domain 301 and the power domain 311.

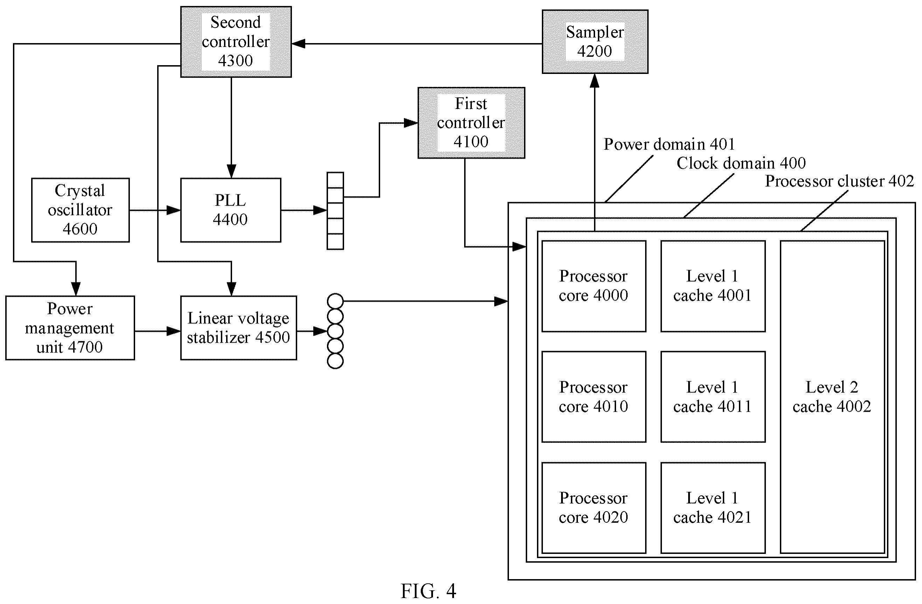

A structure of the dynamic voltage and frequency scaling system provided in this application is described by using an example in which the terminal device includes a plurality of processor cores, and the plurality of processor cores are uniformly controlled in a same processor cluster. FIG. 4 is a diagram of a structure of another dynamic voltage and frequency scaling system according to an embodiment of this application. The dynamic voltage and frequency scaling system may include a first controller 4100, a sampler 4200, and a second controller 4300. The dynamic voltage and frequency scaling system may adjust a frequency of a processing system (including one or more of the following: a plurality of processor cores, a plurality of level 1 caches, and a level 2 cache) of a terminal device, so that the processing system may be in different states. In addition, performance of the processing system in different states is sampled and compared, to determine a frequency scaling factor of the processing system, and determine a change relationship between the performance and the frequency of the processing system. In this way, the frequency and a voltage of the processing system can be respectively adjusted to a working voltage and a working frequency in real time and accurately, and the processing system is stabilized at a balance point between performance and energy consumption in real time, so that an energy efficiency ratio is increased.

A processor cluster 402 may include a plurality of processor cores, for example, a processor core 4000, a processor core 4010, and a processor core 4020. The processor cluster 402 may also include a level 1 cache 4001 (which may correspond to the processor core 4000), a level 1 cache 4011 (which may correspond to the processor core 4010), and a level 1 cache 4021 (which may correspond to the processor core 4020). The processor cluster 402 may further include a level 2 cache 4002 shared by the processor core 4000, the processor core 4010, and the processor core 4020. It may be understood that the processor cores may alternatively use respective corresponding level 2 caches, that is, may not share a level 2 cache. The processor cluster 402 may be in a power domain 401 and a clock domain 400.

Optionally, when a voltage and a frequency of a processor cluster are adjusted, voltages and frequencies of a plurality of processor cores included in the processor cluster may be uniformly adjusted. When the processor cluster further includes a level 1 cache corresponding to each processor core and a shared (or respective corresponding) level 2 cache, voltages and frequencies of the level 1 cache and the level 2 cache may also be uniformly adjusted.

For example, the first controller 4100 may control a frequency generated by a PLL 4400 to be a first frequency, and send the first frequency to the clock domain 400. For example, the processor cluster includes a plurality of processor cores, level 1 caches corresponding to the processor cores, and a level 2 cache shared by the processor cores. In this case, the processor core 4000, the processor core 4010, the processor core 4020, the level 1 caches (including the level 1 cache 4001, the level 1 cache 4011, and the level 1 cache 4021) corresponding to the processor core 4000, the processor core 4010, and the processor core 4020, and the level 2 cache 4002 shared by the processor core 4000, the processor core 4010, and the processor core 4020 work at the first frequency and are in a first state. The sampler 4200 may separately collect performance data (for example, MIPS, IPC, or benchmark scores) of the processor core 4000, the processor core 4010, and the processor core 4020 in the first state. It may be understood that, because types and a quantity of services processed by the processor cores may be different, performance of the processor cores working at a same frequency may also be different. For a solution in which the first controller 4100 implements frequency control, refer to related descriptions of the first controller 2100. Details are not described herein again.

After the first frequency lasts for a period of time, the first controller 4100 may decrease a frequency of a clock output by the PLL 4400 to the second frequency (for example, the first frequency is greater than the second frequency), and then provide the clock to the clock domain 300. In this case, the processor core 4000, the processor core 4010, the processor core 4020, the level 1 caches (including the level 1 cache 4001, the level 1 cache 4011, and the level 1 cache 4021) corresponding to the processor core 4000, the processor core 4010, and the processor core 4020, the level 2 cache 4002 shared by the processor core 4000, the processor core 4010, and the processor core 4020 work at the second frequency and are in a second state. The sampler 4200 may separately collect performance data (for example, MIPS, IPC, or benchmark scores) of the processor core 4000, the processor core 4010, and the processor core 4020 in the first state. Performance of the processor cores at the second frequency may be the same or may be different. It may be understood that, after the second frequency lasts for a period of time, the first controller 4100 may restore a frequency of the processor cluster 402 from the second frequency to the first frequency, so that the plurality of processor cores may be restored to the first state for running. Certainly, the first controller 4100 may further increase the frequency, so that the plurality of processor cores work at a frequency greater than the first frequency, to obtain higher performance. Alternatively, the first controller 4100 may continue to decrease the frequency, to decrease the frequency from the second frequency to another frequency, and the sampler 3200 may collect performance data of the processing system 1 operating at the another frequency.

After obtaining performance data of a plurality of processor cores in different states, the sampler 4200 may compare different performance data of a same processor core, and then separately calculate frequency scaling factors of the plurality of processor cores (including the processor core 4000, the processor core 4010, and the processor core 4020) under a current workload. For descriptions of determining the frequency scaling factor of each processor core, refer to related descriptions (for example, Formula 1.1 to Formula 2.4) in the foregoing single-processor-core scenario. Details are not described herein again.

The sampler 4200 sends the frequency scaling factor determined for each processor core to the second controller 4300. The second controller 4300 may make a frequency and voltage adjustment decision based on the frequency scaling factor of each processor core and with reference to constraint information (for example, frequency information of a memory, frequency information of a level 3 cache, or a configuration policy of software). For example, the decision may be that a voltage is increased and a frequency is increased, or may be that a voltage is decreased and a frequency is decreased, or may be that a voltage and a frequency remain unchanged. It may be understood that, frequencies and voltages of the plurality of processor cores, the level 1 caches corresponding to the plurality of processor cores, and the level 2 cache corresponding to (shared by) the plurality of processor cores that are located in a same clock domain and a same power domain may be uniformly adjusted. Because types and a quantity of services processed by the processor cores, the level 1 caches, and the level 2 cache of the processor cores may be different, frequency scaling factors of the plurality of processor cores may also be different. In this case, when the frequencies and the voltages are uniformly adjusted, a frequency and voltage adjustment policy of the plurality of processor cores may be comprehensively considered with reference to factors such as a service priority, a performance priority, or an energy efficiency priority. For example, based on a frequency and voltage adjustment decision of a processor core with a highest service priority of a processed service and a level 1 cache and a level 2 cache of the processor core, frequencies and voltages of other processor cores, other level 1 caches, and the level 2 caches are uniformly adjusted.

In conclusion, in this embodiment of this application, in a running process of a computer, the frequency of the processing system may be adjusted, so that the processing system may be in different states. In addition, performance of the processing system in different states is sampled and compared, to determine the frequency scaling factor of the processing system. This avoids using a complex prediction model or prediction algorithm to predict the frequency scaling factor. Instead, a change relationship between the performance and the frequency of the processing system is determined based on an actual frequency change and an actual performance change. In this way, a frequency and a voltage of the processing system can be accurately adjusted to the working voltage and the working frequency in real time, and the processing system is stabilized at a balance point between performance and energy consumption in real time, so that an energy efficiency ratio is increased.

The foregoing describes the dynamic voltage and frequency scaling system in embodiments of this application. The following describes a related method in embodiments of this application.

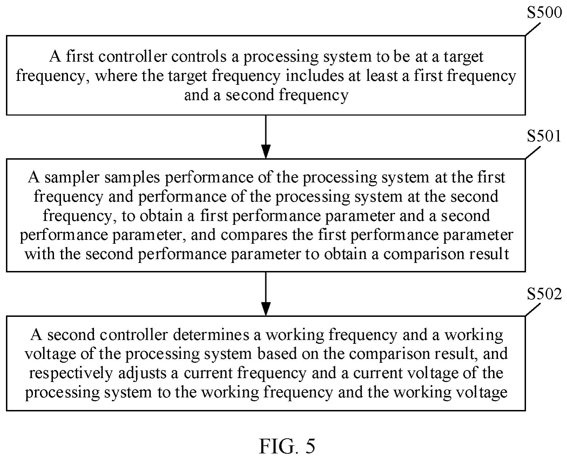

FIG. 5 is a schematic flowchart of a dynamic voltage and frequency scaling method according to an embodiment of this application. The method may be applied to a terminal device, and the terminal device may be the terminal device in FIG. 1a or FIG. 1b. To be specific, the terminal device in FIG. 1a or FIG. 1b may be configured to: support and perform step S500 to step S502 in the procedure of the method shown in FIG. 5. The following provides step S500 to step S502.

Step S500: A first controller controls a processing system to be at a target frequency, where the target frequency includes at least a first frequency and a second frequency.

Step S501: A sampler samples performance of the processing system at the first frequency and performance of the processing system at the second frequency, to obtain a first performance parameter and a second performance parameter, and compares the first performance parameter with the second performance parameter to obtain a comparison result.

Step S502: A second controller determines a working frequency and a working voltage of the processing system based on the comparison result, and respectively adjusts a current frequency and a current voltage of the processing system to the working frequency and the working voltage.

In a possible implementation, determining the working frequency and the working voltage of the processing system based on the comparison result, and respectively adjusting the current frequency and the current voltage of the processing system to the working frequency and the working voltage includes:

obtaining constraint information, where the constraint information includes one or more of the following: frequency information of a memory connected to the processing system, frequency information of a level 3 cache connected to the processing system, and a configuration policy of software running on the processing system; and
when the working frequency and the working voltage meet a requirement of the constraint information, respectively adjusting the current frequency and the current voltage of the processing system to the working frequency and the working voltage.

In a possible implementation, the method further includes:
when the working frequency and the working voltage do not meet the requirement of the constraint information, updating the working frequency and the working voltage based on the constraint information and the comparison result, and respectively adjusting the current frequency and the current voltage of the processing system to an updated working frequency and an updated working voltage.

In a possible implementation, the method further includes: comparing the first performance parameter with the second performance parameter to obtain the comparison result includes:

> comparing the first performance parameter with the second performance parameter to obtain a performance difference or a performance ratio; and determining a frequency scaling factor of the processing system based on a frequency difference or a frequency ratio and the performance difference or the performance ratio, where the frequency scaling factor represents a relationship between a performance change and a frequency change of the processing system; the comparison result includes the frequency scaling factor; and the frequency difference is a difference between the first frequency and the second frequency, and the frequency ratio is a ratio of the first frequency to the second frequency.

In a possible implementation, controlling the processing system to be at the target frequency includes: controlling, based on pre-configuration information, the processing system to switch between the first frequency and the second frequency in a time-division manner, where the pre-configuration information includes duration of the first frequency and duration of the second frequency.

In a possible implementation, the processing system includes one or more of the following: a processor core, a level 1 cache, and a level 2 cache.

In a possible implementation, the first performance parameter includes a first operation speed, and the second performance parameter includes a second operation speed.

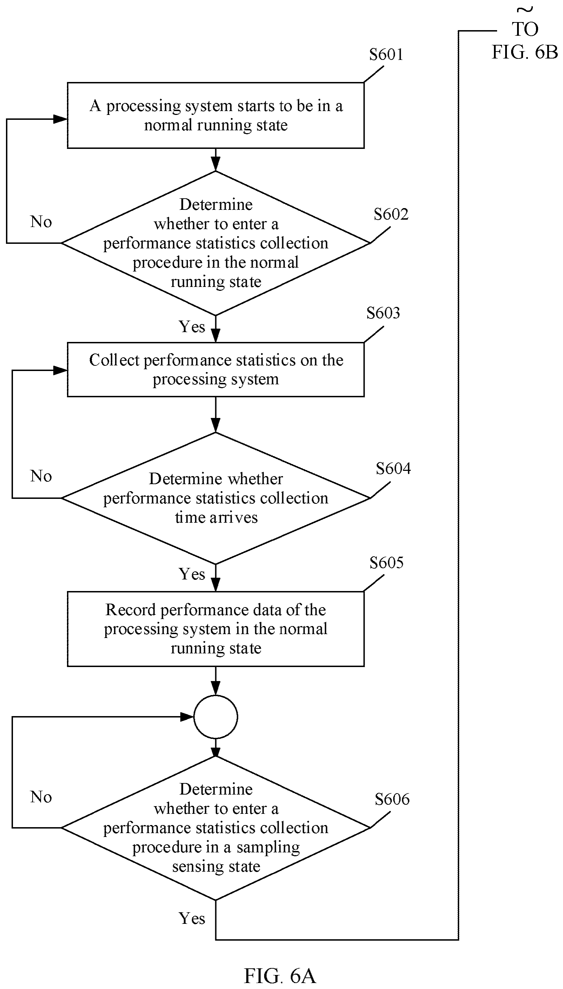

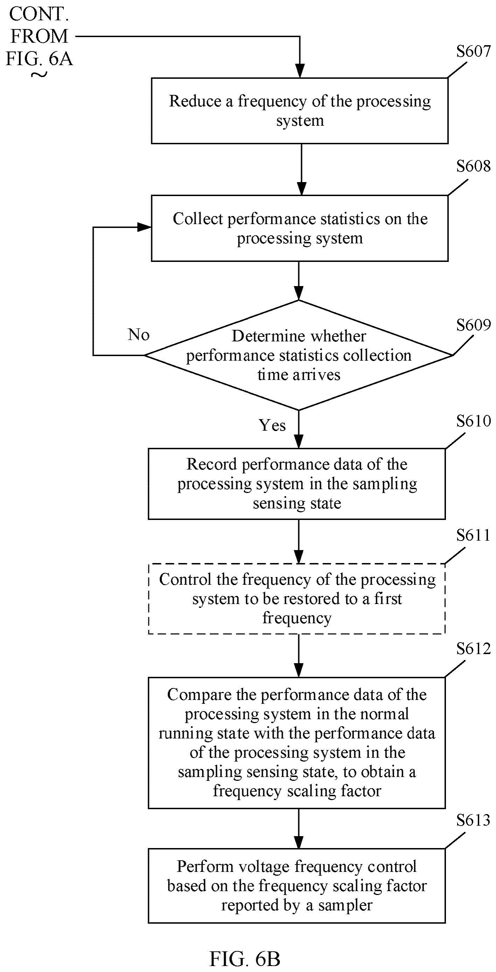

For ease of understanding, the following further details a procedure of the dynamic voltage and frequency scaling method according to this embodiment of this application. FIG. 6A and FIG. 6B are a schematic flowchart of dynamic voltage and frequency scaling according to an embodiment of this application. The method includes the following steps.

S601: A processing system starts to be in a normal running state (corresponding to a first state, where the processing system works at a first frequency).

S602: A terminal device determines whether to enter a performance statistics collection procedure in the normal running state (in other words, whether to sample a first performance parameter at the first frequency). If yes, go to S603. If no, the processing system continues to be in the normal running state.

S603: A sampler collects performance statistics on the processing system. For example, the sampler accumulates a quantity of instructions executed by the processing system and time consumed for executing the instructions.

S604: The sampler determines whether performance statistics collection time arrives. If yes, go to S605. If no, continue to collect statistics.

S605: The sampler records performance data of the processing system in the normal running state.

S606: The terminal device determines whether to enter a performance statistics collection procedure in a sampling sensing state (corresponding to a second state). If yes, go to S607. If no, continue to be in the normal running state.

S607: The first controller decreases a frequency of the processing system (for example, to a second frequency, where an example in which the first frequency is greater than the second frequency is used).

S608: The sampler collects performance statistics on the processing system. For example, the sampler accumulates a quantity of instructions executed by the processing system and time consumed for executing the instructions.

S609: The sampler determines whether performance statistics collection time arrives. If yes, go to S610. If no, continue to collect statistics.

S610: A sampling controller records performance data of the processing system in the sampling sensing state.

S611: The first controller controls the frequency of the processing system to be restored to the first frequency. In this case, the processing system exits the sampling sensing state and is restored to the normal running state. Optionally, S611 may be skipped, and S610 is directly switched to S612. In other words, the processing system may not exit the sampling sensing state.

S612: The sampler compares the performance data of the processing system in the normal running state with the performance data of the processing system in the sampling sensing state, to obtain a frequency scaling factor.

S613: The second controller performs voltage frequency control based on the frequency scaling factor reported by the sampler. For example, the second controller may perform decision-making based on the frequency scaling factor and various constraint information, to determine whether to perform operations of increasing a voltage and increasing a frequency, or operations of decreasing a voltage and decreasing a frequency, or operations of maintaining a voltage and maintaining a frequency.

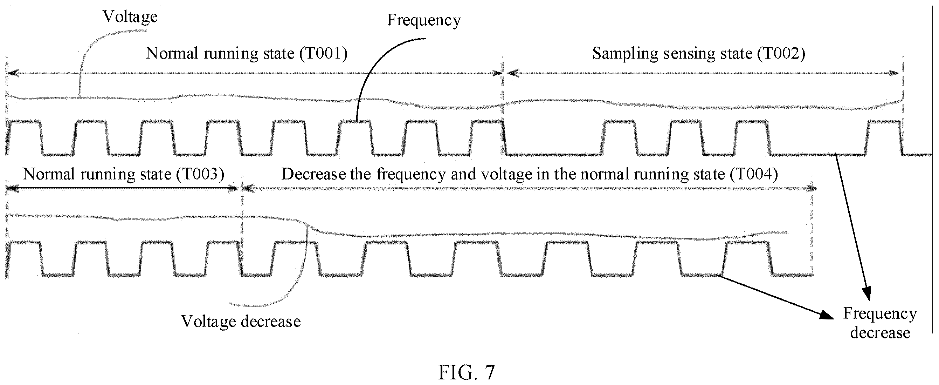

The following further describes a time sequence of the voltage frequency adjustment procedure in FIG. 6A and FIG. 6B. FIG. 7 is a diagram of a time sequence of dynamic voltage and frequency scaling according to an embodiment of this application.

A phase T001 corresponds to steps S601 to S606 in FIG. 6A. The processing system is in the normal running state (corresponding to the first state, and the processing system works at the first frequency), and the sampler may collect statistics on and record performance data of the processing system in the normal running state in this phase.

A phase T002 corresponds to steps S607 to S610 in FIG. 6B. The processing system is in the sampling sensing state (corresponding to the second state, and the processing system works at the second frequency). The sampler may collect statistics on and record performance data of the processing system in the sampling sensing state in this phase. Optionally, the first controller may discard some clock pulses of a signal output by a PLL frequency channel through clock gating. This is equivalent to frequency decrease (for example, the first frequency is greater than the second frequency), so that the processing system switches from the normal running state to the sampling sensing state. In the phase T002, a voltage of the processing system may not be adjusted. In other words, when the processing system is in the sampling sensing state, a voltage that is consistent with a voltage in the normal running state may be maintained.

A phase T003 corresponds to steps S611 and S612 in FIG. 6B. Upon ending of the sampling sensing state, the processing system is restored to the normal running state. The sampler compares performance data of the processing system in the normal running state with performance data of the processing system in the sampling sensing state, to obtain a frequency scaling factor. Optionally, when the processing system is controlled to exit the sampling sensing state, the first controller temporarily disables clock gating and stops discarding a clock pulse, so that the frequency is restored from the second frequency to the first frequency, and the processing system is restored from the sampling sensing state to the normal running state.

A phase T004 corresponds to step S613 in FIG. 6B. The second controller performs voltage frequency control based on the frequency scaling factor reported by the sampler. For example, a frequency and a voltage are decreased.

In conclusion, in this embodiment of this application, in a running process of the computer, the frequency of the processing system may be adjusted, so that the processing system may be in different states. In addition, performance of the processing system in different states is sampled and compared, to determine the frequency scaling factor of the processing system. This avoids using a complex prediction model or prediction algorithm to predict the frequency scaling factor. Instead, a change relationship between the performance and the frequency of the processing system is determined based on an actual frequency change and an actual performance change. In this way, a frequency and a voltage of the processing system can be accurately adjusted to the working voltage and the working frequency in real time, and the processing system is stabilized at a balance point between performance and energy consumption in real time, so that an energy efficiency ratio is increased.

It should be noted that, for related descriptions of a procedure of the dynamic voltage and frequency scaling method described in embodiments of this application, refer to related descriptions in the foregoing apparatus embodiment. Details are not described herein again.

An embodiment of this application further provides a computer-readable storage medium. The computer-readable storage medium stores computer program code. When a processor executes the computer program code, a computer is enabled to perform the method in any one of the foregoing embodiments.

An embodiment of this application further provides a terminal device. The terminal device may exist in a product form of chip. The terminal device includes a processor. The processor is configured to support the terminal device in implementing a corresponding function in the method in any one of the foregoing embodiments. The terminal device may further include a memory. The memory is configured to be coupled to the processor, and the memory stores program instructions and data that are necessary for the terminal device. The terminal device may further include a communication interface, configured to implement communication between the terminal device and another device or a communication network.

An embodiment of this application further provides a computer program product. When the computer program product runs on a computer, the computer is enabled to perform the method in any of the foregoing embodiments.

An embodiment of this application provides a chip system. The chip system includes a processor, configured to support a device in implementing a function in the first aspect, for example, generating or processing information in the foregoing dynamic voltage and frequency scaling method. In a possible design, the chip system further includes a memory, and the memory is configured to store program instructions and data that are necessary for the device. The chip system may include a chip, or may include a chip and another discrete component.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of software functional unit.

When the foregoing integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device, specifically, may be a processor in the computer device) to perform all or some of the steps of the methods described in embodiments of this application. The foregoing storage medium may include any medium that can store program code, such as a USB flash drive, a removable hard disk, a magnetic disk, an optical disc, a read-only memory (read-only memory, ROM), or a random access memory (random access memory, RAM).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1. A dynamic voltage and frequency scaling system, wherein the system comprises:

   a first controller, configured to control a processing system to be at a target frequency, wherein the target frequency comprises at least a first frequency and a second frequency;
   a sampler, configured to: sample performance of the processing system at the first frequency and performance of the processing system at the second frequency, to obtain a first performance parameter and a second performance parameter; and compare the first performance parameter with the second performance parameter to obtain a comparison result; and
   a second controller, configured to: determine a working frequency and a working voltage of the processing system based on the comparison result, and respectively adjust a current frequency and a current voltage of the processing system to the working frequency and the working voltage.

2. The system according to claim 1, wherein the second controller is specifically configured to:

   obtain constraint information, wherein the constraint information comprises one or more of the following: frequency information of a memory connected to the processing system, frequency information of a level 3 cache connected to the processing system, and a configuration policy of software running on the processing system; and when the working frequency and the working voltage meet a requirement of the constraint information, respectively adjust the current frequency and the current voltage of the processing system to the working frequency and the working voltage.

3. The system according to claim 2, wherein the second controller is further specifically configured to:
   when the working frequency and the working voltage do not meet the requirement of the constraint information, update the working frequency and the working voltage based on the constraint information and the comparison result, and respectively adjust the current frequency and the current voltage of the processing system to an updated working frequency and an updated working voltage.

4. The system according to any one of claims 1 to 3, wherein the sampler is specifically configured to:

   compare the first performance parameter with the second performance parameter to obtain a performance difference or a performance ratio; and

determine a frequency scaling factor of the processing system based on a frequency difference or a frequency ratio and the performance difference or the performance ratio, wherein the frequency scaling factor represents a relationship between a performance change and a frequency change of the processing system; the comparison result comprises the frequency scaling factor; and the frequency difference is a difference between the first frequency and the second frequency, and the frequency ratio is a ratio of the first frequency to the second frequency.

5. The system according to any one of claims 1 to 4, wherein the first controller is specifically configured to:
control, based on pre-configuration information, the processing system to switch between the first frequency and the second frequency in a time-division manner, wherein the pre-configuration information comprises duration of the first frequency and duration of the second frequency.

6. The system according to any one of claims 1 to 5, wherein the processing system comprises one or more of the following: a processor core, a level 1 cache, and a level 2 cache.

7. The system according to claims 1 to 6, wherein the first performance parameter comprises a first operation speed, and the second performance parameter comprises a second operation speed.

8. A dynamic voltage and frequency scaling method, wherein the method comprises:

controlling, by a first controller, a processing system to be at a target frequency, wherein the target frequency comprises at least a first frequency and a second frequency;
sampling, by a sampler, performance of the processing system at the first frequency and performance of the processing system at the second frequency, to obtain a first performance parameter and a second performance parameter, and comparing the first performance parameter with the second performance parameter to obtain a comparison result; and
determining, by a second controller, a working frequency and a working voltage of the processing system based on the comparison result, and respectively adjusting a current frequency and a current voltage of the processing system to the working frequency and the working voltage.

9. The method according to claim 8, wherein determining the working frequency and the working voltage of the processing system based on the comparison result, and respectively adjusting the current frequency and the current voltage of the processing system to the working frequency and the working voltage comprises:

obtaining constraint information, wherein the constraint information comprises one or more of the following: frequency information of a memory connected to the processing system, frequency information of a level 3 cache connected to the processing system, and a configuration policy of software running on the processing system; and
when the working frequency and the working voltage meet a requirement of the constraint information, respectively adjusting the current frequency and the current voltage of the processing system to the working frequency and the working voltage.

10. The method according to claim 9, wherein the method further comprises:
when the working frequency and the working voltage do not meet the requirement of the constraint information, updating the working frequency and the working voltage based on the constraint information and the comparison result, and respectively adjusting the current frequency and the current voltage of the processing system to an updated working frequency and an updated working voltage.

11. The method according to any one of claims 8 to 10, wherein comparing the first performance parameter with the second performance parameter to obtain the comparison result comprises:

comparing the first performance parameter with the second performance parameter to obtain a performance difference or a performance ratio; and
determining a frequency scaling factor of the processing system based on a frequency difference or a frequency ratio and the performance difference or the performance ratio, wherein the frequency scaling factor represents a relationship between a performance change and a frequency change of the processing system; the comparison result comprises the frequency scaling factor; and the frequency difference is a difference between the first frequency and the second frequency, and the frequency ratio is a ratio of the first frequency to the second frequency.

12. The method according to any one of claims 8 to 11, wherein controlling the processing system to be at the target frequency comprises:

controlling, based on pre-configuration information, the processing system to switch between the first frequency and the second frequency in a time-division manner, wherein the pre-configuration information comprises duration of the first frequency and duration of the second frequency.

13. The method according to any one of claims 8 to 12, wherein the processing system comprises one or more of the following: a processor core, a level 1 cache, and a level 2 cache.

14. The method according to any one of claims 8 to 13, wherein the first performance parameter comprises a first operation speed, and the second performance parameter comprises a second operation speed.

15. A computer-readable storage medium, comprising instructions, wherein when the instructions are run on a computer, the computer is enabled to perform the method according to any one of claims 8 to 14.

16. A computer program, wherein the computer program comprises instructions, and when the computer program is executed by a computer, the computer is enabled to perform the method according to any one of claims 8 to 14.

17. A terminal device, comprising a processor and a memory, wherein the memory is configured to store program code, and when the program code is executed by the processor, the terminal device implements the method according to any one of claims 8 to 14.

18. A chip system, wherein the chip system comprises at least one processor, a memory, and an interface circuit, the memory, the interface circuit, and the at least one processor are interconnected through a line, the at least one memory stores instructions, and when the instructions are executed by the processor, the method according to any one of claims 8 to 14 is implemented.

FIG. 1a

Terminal device 02

21

Processor

Processor core

Memory

22

Dynamic voltage and frequency scaling (DVFS) system

23

Power management unit

24

Other hardware

FIG. 1b

FIG. 2a

First
controller
2100

Frequency
channel 1

Frequency
channel 2

Frequency
channel 3

Frequency
channel 4

PLL
2400

Clock domain
200

FIG. 2b

First
controller
2100

First
frequency

Second
frequency

PLL
2400

Clock
selector

First
frequency
or second
frequency

Clock
domain 200

FIG. 2c

FIG. 2d

FIG. 2e

FIG. 3

FIG. 4

S500

A first controller controls a processing system to be at a target frequency, where the target frequency includes at least a first frequency and a second frequency

S501

A sampler samples performance of the processing system at the first frequency and performance of the processing system at the second frequency, to obtain a first performance parameter and a second performance parameter, and compares the first performance parameter with the second performance parameter to obtain a comparison result

S502

A second controller determines a working frequency and a working voltage of the processing system based on the comparison result, and respectively adjusts a current frequency and a current voltage of the processing system to the working frequency and the working voltage

FIG. 5

~
TO
FIG. 6B

S601

A processing system starts to be in a
normal running state

S602

Determine
whether to enter a
performance statistics collection
procedure in the normal
running state

No

Yes

S603

Collect performance statistics on the
processing system

S604

Determine whether
performance statistics collection
time arrives

No

Yes

S605

Record performance data of the
processing system in the normal
running state

S606

Determine
whether to enter a
performance statistics collection
procedure in a sampling
sensing state

No

Yes

FIG. 6A

CONT.
FROM
FIG. 6A

S607

Reduce a frequency of the processing
system

S608

Collect performance statistics on the
processing system

S609

Determine whether
performance statistics collection
time arrives

No

Yes

S610

Record performance data of the
processing system in the sampling
sensing state

S611

Control the frequency of the processing
system to be restored to a first
frequency

S612

Compare the performance data of the
processing system in the normal
running state with the performance data
of the processing system in the
sampling sensing state, to obtain a
frequency scaling factor

S613

Perform voltage frequency control
based on the frequency scaling factor
reported by a sampler

FIG. 6B

FIG. 7

## INTERNATIONAL SEARCH REPORT

| International application No. |
|---|
| **PCT/CN2024/077495** |

### A. CLASSIFICATION OF SUBJECT MATTER

G06F 1/3203(2019.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, IEEE: 电压, 频率, 调节, 调整, 性能, 参数, 采样, 采集, 比较, 比对, 控制, 第一, 第二, 约束, voltage, frequency, adjust, performance, parameter, sample, collect, compare, control, first, second, constraint

### C. DOCUMENTS CONSIDERED TO BE RELEVANT

| Category* | Citation of document, with indication, where appropriate, of the relevant passages | Relevant to claim No. |
|---|---|---|
| A | CN 112292652 A (HUAWEI TECHNOLOGIES CO., LTD.) 29 January 2021 (2021-01-29) claims 1-5 | 1-18 |
| A | CN 106527654 A (LEECO HOLDINGS (BEIJING) CO., LTD. et al.) 22 March 2017 (2017-03-22) entire document | 1-18 |
| A | CN 111429333 A (BOE TECHNOLOGY GROUP CO., LTD. et al.) 17 July 2020 (2020-07-17) entire document | 1-18 |
| A | CN 115525439 A (GUANGDONG MINGCHUANG SOFTWARE TECHNOLOGY CO., LTD.) 27 December 2022 (2022-12-27) entire document | 1-18 |
| A | US 2008307240 A1 (TEXAS INSTRUMENTS INC.) 11 December 2008 (2008-12-11) entire document | 1-18 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 April 2024** | **07 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/077495**

| Patent document cited in search report | | | Publication date (day/month/year) | Patent family member(s) | | | Publication date (day/month/year) |
|---|---|---|---|---|---|---|---|
| CN | 112292652 | A | 29 January 2021 | WO | 2020172818 | A1 | 03 September 2020 |
| CN | 106527654 | A | 22 March 2017 | | None | | |
| CN | 111429333 | A | 17 July 2020 | | None | | |
| CN | 115525439 | A | 27 December 2022 | | None | | |
| US | 2008307240 | A1 | 11 December 2008 | WO | 2008154321 | A1 | 18 December 2008 |

Form PCT/ISA/210 (patent family annex) (July 2022)

**REFERENCES CITED IN THE DESCRIPTION**

**Patent documents cited in the description**

- CN 202310187361